# EUROPÄISCHE PATENTSCHRIFT

(11) **EP 1 504 069 B1**
(45) Veröffentlichungstag und Bekanntmachung des Hinweises auf die Patenterteilung: **19.07.2006**
(21) Anmeldenummer: 03725138.6
(22) Anmeldetag: 02.05.2003
(51) Int. Cl.: C09D 133/00, C09D 133/04, C09D 125/02

(54) **WÄSSRIGE DISPERSION VON ANORGANISCHEN NANOPARTIKELN, VERFAHREN ZU IHRER HERSTELLUNG UND IHRE VERWENDUNG**
AQUEOUS DISPERSION OF INORGANIC NANOPARTICLES, METHOD FOR THE PRODUCTION AND USE THEREOF
DISPERSION AQUEUSE DE NANOPARTICULES ANORGANIQUES, PROCEDE DE FABRICATION ET UTILISATION

(30) Priorität: 11.05.2002 DE 10221007
(43) Veröffentlichungstag der Anmeldung: 09.02.2005
(73) Patentinhaber: BASF Coatings AG, 48165 Münster (DE)
(72) Erfinder: STÜBBE, Wilfried, 48268 Greven (DE); POPPE, Andreas, 48324 Sendenhorst (DE)
(74) Vertreter: Fitzner, Uwe
(86) Internationale Anmeldenummer: PCT/EP2003/004645
(87) Internationale Veröffentlichungsnummer: WO 2003/095571

(56) Entgegenhaltungen:
- WO-A-99/52964
- WO-A-03/016411
- DE-A- 19 930 664

## Beschreibung

### Gebiet der Erfindung

Die vorliegende Erfindung betrifft eine neue wässrige Dispersion von anorganischen Nanopartikein. Außerdem betrifft die vorliegende Erfindung ein neues Verfahren zur Herstellung wässriger Dispersionen von anorganischen Nanopartikeln. Des weiteren betrifft die vorliegende Erfindung die Verwendung der neuen wässrigen Dispersion von anorganischen Nanopartikeln für die Herstellung von Beschichtungen und Lackierungen sowie Formteilen, insbesondere optischen Formteilen, und freitragenden Folien.

### Stand der Technik

Wässrige Dispersionen von anorganischen Nanopartikein, deren Oberfläche mit mindestens einer Verbindung der allgemeinen Formel 1:

**[(S-)o-L-]**_{**m**}**M(R)n(H)**_{**p**} (I),

worin die Indizes und die Variablen die folgende Bedeutung haben:
- S: reaktive funktionelle Gruppe;
- L: mindestens zweibindige organische verknüpfende Gruppe;
- H: hydrolysierbare einbindige Gruppe oder hydrolysierbares Atom;
- M: zwei- bis sechswertiges Hauptgruppen- und Nebengruppen-Metall;
- R: einbindiger organischer Rest;
- o: eine ganze Zahl von 1 bis 5;
- m + n + p: eine ganze Zahl von 2 bis 6;
- p: eine ganze Zahl von 1 bis 6
- m und n: Null oder eine ganze Zahl von 1 bis 5;
modifiziert sind, sind aus der internationalen Patentanmeldung WO 99/52964 bekannt. Sie werden hergestellt, indem anorganische Nanopartikel mit den Verbindungen 1 in wässriger Dispersion beschichtet werden, wonach man die durch die Hydrolyse und Kondensation entstandenen Alkohole destillativ entfernt.

Die bekannten wässrigen Dispersionen von oberflächenmodifzierten anorganischen Nanopartikeln können als Beschichtungsstoffe zur Herstellung transparenter, kratzfester Beschichtungen verwendet werden.

Dabei weisen die bekannten Beschichtungen eine hohe Transparenz und eine gute Haftung auf sehr vielen Substraten auf. Sie sind aber vergleichsweise spröde und können nicht in Schichtdicken > 30 µm hergestellt werden, weil dann Spannungsrisse auftreten. Außerdem enthaften die bekannten Beschichtungen vergleichsweise leicht nach der Belastung mit Wasser.

Aus der europäischen Patentanmeldung EP 0 832 947 A 2 sind Klarlacke bekannt, die anorganische Nanopartikel enthalten, deren Oberfläche derart modifiziert ist, dass sie mit dem Bindemittel reagieren kann. Die Kratzfestigkeit der aus diesen Klarlacken hergestellten Klarlackierungen reicht aber an die Kratzfestigkeit der aus der internationalen Patentanmeldung WO 99/52964 bekannten Beschichtungen nicht heran. Außerdem enthalten die Klarlacke der europäischen Patentanmeldung große Mengen an organischen Lösemitteln, weswegen sie bei der Applikation und der Härtung große Mengen an flüchtigen organischen Verbindungen (VOC) abgeben, was wirtschaftlich und ökologisch nachteilig ist.

Bekanntermaßen können Aminoplastharze als Vernetzungsmittel oder als zusätzliche Bindemittel für anorganisch-organische Beschichtungsstoffe auf der Basis von hydroxyfunktionellen Polysiloxanen verwendet werden (vgl. den Artikel von B. C. Li und G. Wilkes in Chemical Materials, Heft 13, Seiten 3663 bis 3668, 2001). Die hieraus hergestellten Beschichtungen sind aber spröde, so dass nur Schichtdicken von 3 bis 5 µm realisiert werden können.

In der nicht vorveröffentlichten deutschen Patentanmeldung DE 101 26 651.0 werden Beschichtungsstoffe beschrieben, die
(A) mindestens ein Bindemittel, ausgewählt aus der Gruppe, bestehend aus physikalisch, thermisch, mit aktinischer Strahlung und thermisch und mit aktinischer Strahlung härtbaren, statistisch, alternierend und blockartig aufgebauten, linearen, verzweigten und kammartig aufgebauten, Polyadditionsharzen und Polykondensationsharzen sowie (Co)Polymerisaten von olefinisch ungesättigten Monomeren;
   und
(B) Nanopartikel, ausgewählt aus der Gruppe, bestehend aus Nanopartikeln, die mit mindestens einer Verbindung der allgemeinen Formel 11:

   **[(S-)**_{**o**}**-L-]**_{**n**}**-M-(-X-R)**_{**m-n**} (II),

   worin die Indizes und die Variablen die folgende Bedeutung haben:
   - S: reaktive funktionelle Gruppe mit mindestens einer mit aktinischer Strahlung aktivierbaren Bindung;
   - L: mindestens zweibindige organische verknüpfende Gruppe;
   - X: unabhängig voneinander Sauerstoffatom, Schwefelatom oder >NR¹, mit R¹ = Wasserstoffatom oder Alkylgruppe mit 1 bis 4 Kohlenstoffatomen;
   - M: Metallatom;
   - R: einbindiger organischer Rest;
   - o: eine ganze Zahl von 1 bis 5;
   - m: 3 oder 4;
   - n: für m = 3, 1 oder 2 und
   - n: für m = 4, 1, 2 oder 3;
   modifiziert worden sind;
   enthalten. Die Beschichtungsstoffe können (Meth)Acrylatcopolymerisate als Bindemittel enthalten. Die (Meth)Acrylatcopolymerisate können neben zahlreichen anderen Monomeren auch Monomere (b) der allgemeinen Formel III:

   **R**^{**1**}**R**^{**2**}**C=CR**^{**3**}**R**^{**4**} (III),

   worin die Reste R¹ R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen; enthalten.

Die Beschichtungsstoffe können konventionelle, organische Lösemittel enthaltende Systeme, wässrige Systeme, im wesentlichen oder völlig lösemittel- und wasserfreie flüssige Beschichtungsstoffe (100%-Systeme), im wesentlichen oder völlig lösemittel- und wasserfreie feste Beschichtungsstoffe (Pulverlacke) oder im wesentlichen oder völlig lösemittelfreie Pulverlacksuspensionen (Pulverslurries) sein. In den Beispielen wird indes nur ein konventioneller, organische Lösemittel enthaltender Klarlack beschrieben. Außerdem wird die elektrophoretische Mobilität der Bindemittel in einer wässrigen Dispersion eines pH-Wertes von 2 bis 7 nicht angegeben.

In der nicht vorveröffentlichten deutschen Patentanmeldung DE 101 15 592.1 werden von flüchtigen organischen Verbindungen freie oder im wesentlichen freie, wässrige Dispersionen beschrieben, die
(A) mindestens ein Copolymerisat, herstellbar durch zwei- oder mehrstufige radikalische Copolymerisation in einem wässrigen Medium von
   a) mindestens einem olefinisch ungesättigten Monomer, ausgewählt aus der Gruppe, bestehend aus hydrophilen und hydrophoben olefinisch ungesättigten Monomeren, und
   b) mindestens einem vom olefinisch ungesättigten Monomer (a) verschiedenen olefinisch ungesättigten Monomer der allgemeinen Formel III

      **R**^{**1**}**R**^{**2**}**C=CR**^{**3**}**R**^{**4**} (III),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen; und
(B) hydrophile Nanopartikel
enthalten. Die Oberfläche der hydophilen Nanopartikel ist aber nicht modifiziert.

### Aufgabe der vorliegenden Erfindung

Aufgabe der vorliegenden Erfindung ist es, neue wässrige Dispersionen von oberflächenmodifizierten, anorganischen Nanopartikein bereitzustellen, die die Nachteile des Standes der Technik nicht mehr länger aufweisen, sondern Beschichtungen und Lackierungen sowie optische Formteile und freitragende Folien liefern, die hochkratzfest, hochglänzend, flexibel, transparent und klar sind, wobei die Beschichtungen und die Lacke in Schichtdicken >30 µm keine Spannungsrisse und keine Enthaftung von den Substraten mehr zeigen. Außerdem sollen die Beschichtungen und die Lacke eine hohe Chemikalienstabilität aufweisen.

Insbesondere war es die Aufgabe der vorliegenden Erfindung, neue wässrige Dispersionen bereitzustellen, die einen hohen Gehalt an Nanopartikeln und die eine sehr gute Pigmentbenetzung haben, so dass sie auch hochkratzfeste, spannungsriss- und enthaftungsfreie, farb- und/oder effektgebende Unidecklackierungen, Formteile und freitragende Folien liefern.

### Die erfindungsgemäße Lösung

Demgemäß wurde die neue wässrige Dispersion eines pH-Wertes von 2 bis 7, enthaltend
(A) mindestens ein quellbares Polymer oder Oligomer mit anionischen und/oder potenziell anionischen und/oder nicht-ionischen hydrophilen Gruppen,
(B) oberflächenmodifizierte, kationisch stabilisierte, anorganische Nanopartikel mindestens einer Art,
(C) mindestens ein Amphiphil und
(D) mindestens ein Vernetzungsmittel
gefunden, die im Folgenden als »erfindungsgemäße Dispersion« bezeichnet wird.

Weitere Erfindungsgegenstände gehen aus der Beschreibung hervor.

Im Hinblick auf dem Stand der Technik war es überraschend und für den Fachmann nicht vorhersehbar, dass die Aufgabe, die der vorliegenden Erfindung zugrundelag, mit Hilfe der erfindungsgemäßen Dispersion gelöst werden konnte.

Da eine positive Oberflächenladung für eine Reihe von wässrigen Dispersionen von anorganischen Nanopartikeln (beispielsweise Böhmit und bestimmte Siliziumdioxid-Sole) essenziell ist, war es umso überraschender, dass eine Kombination von kationisch stabilisierten, oberflächenmodifizierten, anorganischen Nanopartikeln mit anionisch stabilisierten Polymeren und Oligomeren zu lagerstabilen, wässrigen Dispersionen führte. Noch mehr überraschte, dass dies mit Hilfe von Copolymerisaten erzielt werden konnte, die in wässrigen Medien eines pH-Wertes von 2 bis 7 leicht quellbar waren und daher eine gute elektrophorethische Mobilität aufwiesen. Insbesondere überraschte, dass die erfindungsgemäßen Dispersionen einen besonders hohen Gehalt an Nanopartikeln aufwiesen.

Vor allem aber überraschte dass die erfindungsgemäßen Dispersionen pigmentierte und unpigmentierte Beschichtungen und Lackierungen lieferten, die auch in Schichtdicken > 30 µm spannungsriss- und enthaftungsfrei, chemilkalienstabil und hochkratzfest waren. Desgleichen waren die aus den erfindungsgemäßen Dispersionen hergestellten Formteile und Folien hochkratzfest, chemikalienstabil und spannungsrissfrei.

### Ausführliche Beschreibung der Erfindung

Die erfindungsgemäße Dispersion hat einen pH-Wert von 2 bis 7, vorzugsweise 2,5 bis 7 und insbesondere 3 bis 6,5. Seine Einstellung erfolgt durch Zugabe von anorganischen und/oder organischen Säuren, die keine unerwünschten Reaktionen mit den Ausgangsprodukten und den Bestandteilen der erfindungsgemäß zu verwendenden Dispersion eingehen, wie Fällungsreaktionen oder die Zersetzung von Nanopartikeln (B). Beispiele geeigneter Säuren sind Ameisensäure, Essigsäure und Salzsäure.

Der Festkörpergehalt der erfindungsgemäß zu verwendenden Dispersion kann sehr breit variieren und richtet sich nach den Erfordernissen des Einzelfalls. Vorzugsweise liegt er bei 10 bis 80, bevorzugt 15 bis 75, besonders bevorzugt 20 bis 70, ganz besonders bevorzugt 25 bis 65 und insbesondere 30 bis 60 Gew.-%, jeweils bezogen auf die Gesamtmenge der erfindungsgemäß zu verwendenden Dispersion.

Der erste wesentliche Bestandteil der erfindungsgemäß zu verwendenden Dispersion ist mindestens ein, insbesondere ein, quellbares Polymer oder Oligomer (A), insbesondere ein Polymer (A), mit anionischen und/oder potenziell anionischen funktionellen Gruppen.

Hier und im Folgenden werden unter Polymeren Verbindungen verstanden, die im statistischen Mittel mehr als 10 Monomereinheiten im Molekül enthalten. Unter Oligomeren werden Verbindungen verstanden, die im statistischen Mittel 2 bis 15 Monomereinheiten im Molekül enthalten. Ergänzend wird hierzu auf Römpp Lexikon Lacke und Druckfarben, Georg Thieme Verlag, Stuttgart, New York, 1998, Seite 425, »Oligomere«, und Seite 464, »Polymere«, verwiesen.

Vorzugsweise werden die anionischen und potenziell anionischen funktionellen Gruppen die potenziell anionischen und die anionischen funktionellen Gruppen aus der Gruppe, bestehend aus Carbonsäure-, Sulfonsäure- und Phosphonsäuregruppen, sauren Schwefelsäure- und Phosphorsäureestergruppen sowie Carboxylat-, Sulfonat-, Phosphonat-, Sulfatester- und Phosphatestergruppen, insbesondere Carbonsäure- und Carboxylatgruppen, ausgewählt.

Der Gehalt der Polymeren und Oligomeren (A) an anionischen und/oder potenziell anionischen funktionellen Gruppen kann sehr breit variieren und richtet sich nach den Erfordernissen des Einzelfalls, insbesondere danach, wie viele dieser Gruppen erforderlich sind, um die Quellbarkeit der Polymeren und Oligomeren (A) in wässrigen Medien eines pH-Wertes von 2 bis 7 sicherzustellen. Vorzugsweise entspricht der Gehalt einer Säurezahl von 5 bis 70, bevorzugt 6 bis 60, besonders bevorzugt 7 bis 50, ganz besonders bevorzugt 8 bis 40 und insbesondere 9 bis 30 mg KOH/g.

Vorzugsweise weisen die quellbaren Polymeren und Oligomeren (A) bei pH-Werten von 2 bis 7 eine elektrophorethische Mobilität ≤ -0,5, bevorzugt ≤ -2,0 (µm/s)/(V/cm), auf. Die elektrophorethische Mobilität kann mit Hilfe der Laser-Doppler-Elektrophorese bestimmt. Dabei kann als Messgerät der Zetasizer ® 3000 der Firma Malvern angewandt werden. Es kommen aber auch mikroelektrophoretische (mikroskopische) Messverfahren in Betracht.

Vorzugsweise werden die Polymeren und Oligomeren (A) aus der Gruppe der Copolymerisate verwendet, die durch die ein- oder zwei- oder mehrstufige, kontrollierte radikalische Copolymerisation in einem wässrigen oder einem organischen, insbesondere in einem wässrigen, Medium erhältlich sind und die im Detail in der deutschen Patentanmeldung DE 199 30 664 A 1, Seite 4, Zeile 28, bis Seite 9, Zeile 49, beschrieben werden. Diese Copolymerisate (A) können auch noch hergestellt werden, indem man ein als Zwischenstufe gebildetes Copolymerisat nach Zugabe geringer Mengen an Initiatoren der radikalischen Polymerisation oder ohne eine solche Zugabe mit mindestens einem olefinisch ungesättigten Monomeren (co)polymerisiert.

In die Copolymerisate (A) können reaktive funktionelle Gruppen eingebaut werden, die mit den nachstehend beschriebenen komplementären reaktiven funktionellen Gruppen (S 2) in den nachstehend beschriebenen Verbindungen 1 thermische Vernetzungsreaktionen eingehen können. Außerdem können funktionelle Gruppen eingebaut werden, die den Copolymerisaten (A) selbstvernetzende Eigenschaften verleihen wie N-Methylol- oder N-Methylolethergruppen. Nicht zuletzt können in die Copolymerisate (A) mindestens eine der nachstehend beschriebenen reaktiven funktionellen Gruppen (S 1) eingebaut werden, die mindestens eine mit aktinischer Strahlung aktivierbare Bindung enthalten, die mit den in den nachstehend beschriebenen Verbindungen I gegebenenfalls vorhandenen, mit aktinischer Strahlung aktivierbaren Bindungen reagieren können. Selbstverständlich können beide Arten von reaktiven funktionellen Gruppen (S 1) und (S 2) in die Copolymerisate (A) eingebaut werden. Die betreffenden Copolymerisate (A) sind dann thermisch und mit aktinischer Strahlung härtbar, was von der Fachwelt auch als Dual-Cure bezeichnet wird.

Hier und im Folgenden wird unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, verstanden.

Das Copolymerisat (A) kann somit mindestens eine, vorzugsweise mindestens zwei, reaktive funktionelle Gruppen (S 2) enthalten, welche mit komplementären reaktiven funktionellen Gruppen (S 2) Reaktionen, insbesondere thermische Vernetzungsreaktionen, eingehen können. Die reaktiven funktionellen Gruppen können dabei über die Monomeren in die Copolymerisate (A) eingebracht oder nach deren Synthese durch polymeranaloge Reaktionen eingeführt werden. Dabei ist darauf zu achten, dass die reaktiven funktionellen Gruppen (S 2) keine unerwünschten Reaktionen miteinander oder mit dem wässrigen Medium eingehen, wie beispielsweise eine unerwünschte Salzbildung, die Bildung unlöslicher Niederschläge oder eine vorzeitige Vernetzung, was alles die Stabilität der erfindungsgemäße Dispersion nachteilig beeinflussen würde.

Vorzugsweise sind die komplementären reaktiven funktionellen Gruppen (S 2) in den nachstehend beschriebenen Bestandteilen (B), (C) und (D) enthalten.

Beispiele geeigneter komplementärer reaktiver funktioneller Gruppen (S 2), welche Vernetzungsreaktionen eingehen, sind in der folgenden Übersicht zusammengestellt. In der Übersicht steht die Variable R⁵ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste.

### Übersicht: Beispiele komplementärer reaktiver funktioneller Gruppen (S 2)

| **Copolymerisat (A) und** | **(B), (C) und/oder (D)** |
|---|---|
| **oder** | |
| **(B), (C) und/oder (D) und** | **Copolymerisat (A)** |
| -SH | -C(O)-OH |
| -OH | -C(O)-O-C(O)- |
| | -NH-C(O)-OR⁵ |
| | -CH₂-OH |
| | -CH₂-O-CH₃ |
| | -NH-C(O)-CH(-C(O)OR⁵)₂ |
| | -NH-C(O)-CH(-C(O)OR⁵)(-C(O)-R⁵) |
| | >Si(OR⁵)₂ |
| -C(O)-OH | 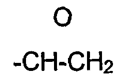 |
| -O-C(O)-CR⁵=CH₂ -O-CR=CH₂ | -OH -C(O)-CH₂-C(O)-R⁵ |
| | -CH=CH₂ |

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 198 28 742 A 1 oder EP 0 498 583 A 1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren durchgeführt, wobei die Taylorreaktoren so ausgelegt werden, dass auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt (vgl. die deutsche Patentanmeldung DE 198 28 742 A1).

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150, ganz besonders bevorzugt 50 bis 120 und insbesondere 55 bis 110°C gewählt wird.

Bei Verwendung besonders leicht flüchtiger Monomere kann die Copolymerisation auch unter Druck, vorzugsweise unter 1,5 bis 3.000 bar, bevorzugt 5 bis 1.500 und insbesondere 10 bis 1.000 bar durchgeführt werden.

Hinsichtlich der Molekulargewichtsverteilung ist das Copolymerisat (A) keinerlei Beschränkungen unterworfen. Vorteilhafterweise wird aber die Copolymerisation so geführt, dass ein Verhältis Mw/Mn, gemessen mit Gelpermeationschromatographie unter Verwendung von Polystyrol als Standard, von ≤ 4, bevorzugt ≤ 2 und insbesondere ≤ 1,5 sowie in einzelnen Fällen auch ≤ 1,3 resultiert (vgl. hierzu die deutsche Patentanmeldung DE 199 30 664 A 1).

Der Gehalt der erfindungsgemäß zu verwendenden Dispersion an dem Copolymerisat (A) kann breit variieren und richtet sich nach den Erfordernissen des Einzelfalls. Vorzugsweise ist das Copolymerisat (A) in der erfindungsgemäß zu verwendenden Dispersion in einer Menge von, bezogen auf die Summe der wesentlichen Bestandteile (A), (B), (C) und (D), 1 bis 40, bevorzugt 1 bis 30 und insbesondere 1 bis 20 Gew.-% enthalten.

Der weitere wesentliche Bestandteil der erfindungsgemäß zu verwendenden Dispersion sind oberflächenmodifizierte, kationisch stabilisierte, anorganische Nanopartikel (B) mindestens einer Art, insbesondere einer Art.

Vorzugsweise werden die zu modifizierenden Nanopartikel aus der Gruppe, bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt.

Vorzugsweise handelt es sich bei den Verbindungen der Metalle um die Oxide, Oxidhydrate, Sulfate oder Phosphate.

Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Aluminiumoxidhydrat und insbesondere Böhmit verwendet.

Vorzugsweise weisen die zu modifizierenden Nanopartikel eine Primärpartikelgröße < 50 nm, bevorzugt 5 bis 50 nm, insbesondere 10 bis 30 nm, auf.

Die erfindungsgemäß zu verwendenden Nanopartikel (B) bzw. deren Oberfläche sind mit mindestens einer Verbindung der allgemeinen Formel I:

**[(S-)**_{**o**}**-L-]**_{**m**}**M(R)**_{**n**}**(H)**_{**p**} (I),

modifiziert.

In der allgemeinen Formel 1 haben die Indizes und der Variablen die folgende Bedeutung:
- S: reaktive funktionelle Gruppe;
- L: mindestens zweibindige organische verknüpfende Gruppe;
- H: hydrolysierbare einbindige Gruppe oder hydrolysierbares Atom;
- M: zwei- bis sechswertiges Hauptgruppen- und Nebengruppen-Metall;
- R: einbindiger organischer Rest;
- o: eine ganze Zahl von 1 bis 5, insbesondere 1;
- m + n + p: eine ganze Zahl von 2 bis 6, insbesondere 3 oder 4;
- p: eine ganze Zahl von 1 bis 6, insbesondere 1 bis 4;
- m und n: Null oder eine ganze Zahl von 1 bis 5, vorzugsweise 1 bis 3, insbesondere 1, speziell m = 1 und n = 0.

Dabei kann die Modifizierung durch physikalische Adsorption der Verbindungen I an die Oberfläche der unmodifizierten Nanopartikel und/oder durch chemische Reaktion der Verbindungen 1 mit geeigneten reaktiven funktionellen Gruppen an der Oberfläche der unmodifizierten Nanopartikel erfolgen. Vorzugsweise erfolgt die Modifizierung über chemische Reaktionen.

Beispiele geeigneter Metalle M sind die vorstehend beschriebenen.

Vorzugsweise wird die reaktive funktionelle Gruppe S aus der Gruppe, bestehend aus (S 1) reaktiven funktionellen Gruppen, die mindestens eine mit aktinischer Strahlung aktivierbare Bindung enthalten, und (S 2) reaktiven funktionellen Gruppen, die mit Gruppen ihrer Art ("mit sich selbst") und/oder mit komplementären reaktiven funktionellen Gruppen Reaktionen eingehen, ausgewählt. Beispiele geeigneter reaktiver funktioneller Gruppen (S 2) sind die vorstehend beschriebenen, insbesondere die Epoxidgruppen.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte reaktive Gruppe (S 1) eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe (S 1) vorliegen. Erfindungsgemäß ist es von besonderem Vorteil, zwei Doppelbindungen, insbesondere eine Doppelbindung, zu verwenden.

Die mit aktinischer Strahlung aktivierbaren Bindungen können über Kohlenstoff-Kohlenstoffbindungen oder Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Hamstoff-, Thiohamstoff-, Carbonyl-, Thiocarbonyl-, Sulfon- oder Sulfoxidgruppen, insbesondere aber über Kohlenstoff-Kohlenstoff-Bindungen, Carbonsäureestergruppen und Ethergruppen, mit der verknüpfenden Gruppe L verbunden sein.

Besonders bevorzugte reaktive funktionelle Gruppen (S 1) sind daher (Meth)Acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbomenyl-, lsoprenyl-, Isopropenyl-, Allyl- oder Butenylethergruppen oder Dicyclopentadienyl-, Norbomenyl-, Isoprenyl-, Isopropenyl-, Allyl- oder Butenylestergruppen, insbesondere aber Methacrylatgruppen (S 1).

Die Variable H steht für eine hydrolysierbare einbindige Gruppe oder für ein hydrolysierbares Atom.

Beispiele geeigneter hydrolysierbarer Atome sind Wasserstoffatome und Halogenatome, insbesondere Chlor- und Bromatome.

Vorzugsweise werden die hydrolysierbaren einbindigen Gruppen verwendet. Beispiele geeigneter Gruppen dieser Art sind Gruppen der allgemeinen Formel IV:

**-X-R** ( IV).

In der allgemeinen Formel III steht steht die Variable X für ein Sauerstoffatom, Schwefelatom und/oder eine Gruppe >NR⁶, worin R⁶ eine Alkylgruppe mit 1 bis 4 Kohlenstoffatomen, insbesondere Methyl, Ethyl, Propyl und n-Butyl, bedeutet. Bevorzugt steht X für ein Sauerstoffatom.

R steht für einen einbindigen organischen Rest. Der einbindige Rest R kann substituiert oder unsubstituiert sein; vorzugsweise ist er unsubstituiert. Er kann aromatisch, aliphatisch oder cycloaliphatisch sein. Ein einbindiger Rest R wird dann als aromatisch angesehen, wenn X direkt mit dem aromatischen Rest verbunden ist. Diese Regel ist sinngemäß auf die aliphatischen und cycloaliphatischen Reste anzuwenden. Vorzugsweise werden lineare oder verzweigte, insbesondere lineare, aliphatische Reste eingesetzt. Bevorzugt sind niedere aliphatische Reste. Von diesen werden die Methylgruppen oder die Ethylgruppen ganz besonders bevorzugt verwendet.

Die Variable L steht für eine mindestens zweibindige, insbesondere zweibindige, organische verknüpfende Gruppe.

Beispiele geeigneter zweibindiger organischer vernüpfender Gruppen L sind gegebenenfalls Heteroatome enthaltende, aliphatische, aromatische, cycloaliphatische und aromatisch-cycloaliphatische Kohlenwasserstoffreste, wie
(1) substituierte oder unsubstituierte, bevorzugt unsubstituierte, lineare oder verzweigte, vorzugsweise lineare, Alkandiyl-Reste mit 3 bis 30, bevorzugt 3 bis 20 und insbesondere 3 Kohlenstoffatomen, die innerhalb der Kohlenstoffkette auch cyclische Gruppen enthalten können, insbesondere Trimethylen, Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, 2-Heptyl-1-pentyl-cyclohexan-3,4-bis(non-9-yl), Cyclohexan-1,2-, -1,4- oder -1,3-bis(methyl), Cyclohexan-1,2-, -1,4- oder 1,3-bis(eth-2-yl), Cyclohexan-1,3-bis(prop-3-yl) oder Cyclohexan-1,2-, -1,4- oder 1,3-bis(but-4-yl);
(2) substituierte oder unsubstituierte, bevorzugt unsubstituierte, lineare oder verzweigte, vorzugsweise lineare, Oxalkandiyl-Reste mit 3 bis 30, bevorzugt 3 bis 20 und insbesondere 3 bis 6 Kohlenstoffatomen, die innerhalb der Kohlenstoffkette auch cyclische Gruppen enthalten können, insbesondere Oxapropan-1,4-diyl, Oxabutan-1,5-diyl, Oxapentan-1,5-diyl, Oxahexan-1,7-diyl oder 2-Oxapentan-1,5-diyl;
(3) zweiwertige Polyesterreste mit wiederkehrenden Polyesteranteilen der Formel -(-CO-(CHR⁷)ᵣ- CH₂-O-)- aus. Hierbei ist der Index r bevorzugt 4 bis 6 und der Substitutent R⁷ = Wasserstoff, ein Alkyl-, Cycloalkyl- oder Alkoxy-Rest. Kein Substituent enthält mehr als 12 Kohlenstoffatome;
(4) lineare Polyetherreste, vorzugsweise mit einem zahlenmittleren Molekulargewicht von 400 bis 5.000, insbesondere von 400 bis 3.000, die sich von Poly(oxyethylen)glykolen, Poly(oxypropylen)glykolen und Poly(oxybutylen)glykolen ableiten;
(5) lineare Siloxanreste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste;
(6) Phen-1,4-, -1,3- oder -1,2-ylen, Naphth-1,4-, -1,3-, -1,2-, -1,5- oder - 2,5-ylen, Propan-2,2-di(phen-4'-yl), Methan-di(phen-4'-yl), Diphenyl-4,4'-diyl oder 2,4- oder 2,6-Toluylen; oder
(7) Cycloalkandiyl-Reste mit 4 bis 20 Kohlenstoffatomen, wie Cyclobutan-1,3-diyl, Cyclopentan-1,3-diyl, Cyclohexan-1,3- oder - 1,4-diyl, Cyctoheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cycfohexan-1,5-diyl oder Dicyclohexylmethan-4,4'-diyl.

Besonders bevorzugt werden die verknüpfenden Gruppen L (1) und L (2), ganz besonders bevorzugt Trimethylen, Tetramethylen, Pentamethylen, Hexamethylen, Heptamethylen, Octamethylen, Oxapropan-1,4-diyl oder 2-Oxapentan-1,5-diyl und insbesondere Trimethylen, Oxapropan-1,4-diyl oder 2-Oxapentan-1,5-diyl verwendet.

In der allgemeinen Formel 1 steht die Variable o für eine ganze Zahl von 1 bis 5, vorzugsweise 1 bis 4, bevorzugt 1 bis 3 und besonders bevorzugt 1 und 2. Insbesondere ist o gleich 1.

Die Verbindungen I können auch in komplexierter Form eingesetzt werden, wie dies beispielsweise in der internationalen Patentanmeldung WO 99/52964, Seite 8, Zeilen 12 bis 20, beschrieben wird.

Die Verbindungen I sind üblich und bekannt und zu einem großen Teil im Handel erhältlich. Gut geeignete Verbindungen I sind beispielsweise aus der
- internationalen Patentanmeldung WO 99/52964, Seite 6, Zeile 1, bis Seite 8, Zeile 20,
- der deutschen Patentanmeldung DE 197 26 829 A 1, Spalte 2, Zeile 27, bis Spalte 3, Zeilen 38,
- der deutschen Patentanmeldung DE 199 10 876 A 1, Seite 2, Zeile 35, bis Seite 3, Zeile 12,
- der deutschen Patentanmeldung DE 38 28 098 A 1, Seite 2, Zeile 27, bis Seite 4, Zeile 43, oder
- der europäischen Patentanmeldung EP 0 450 625 A 1, Seite 2, Zeile 57, bis 5, Zeile 32,
bekannt.

Methodisch gesehen bietet die Modifizierung der Oberfläche der Nanopartikel keine Besonderheiten, sondern erfolgt nach den üblichen und bekannten Verfahren, die beispielsweise aus der internationalen Patentanmeldung WO 99/52964, Seite 10, Zeile 22, bis Seite 11, Zeile 17, und Beispiele 1 bis 20, Seite 14, Zeile 10, bis Seite 20 Zeile 24, oder aus der deutschen Patentanmeldung DE 197 26 829 A 1, Beispiele 1 bis 6, Spalte 5, Zeile 63, bis Spalte 8, Zeile 38, bekannt sind. Vorzugsweise werden die dort angegebenen Mengenverhältnisse von Verbindungen 1 zu unmodifizierten Nanopartikeln angewandt.

Der Gehalt der erfindungsgemäß zu verwendenden Dispersion an den oberflächenmodifizierten, anorganischen Nanopartikeln (B) kann breit variieren und richtet sich nach den Erfordernissen des Einzelfalls. Vorzugsweise sind die Nanopartikel (B) in der erfindungsgemäß zu verwendenden Dispersion in einer Menge von, bezogen auf die Summe der wesentlichen Bestandteile (A), (B), (C) und (D), 30 bis 95, bevorzugt 40 bis 90 und insbesondere 40 bis 85 Gew.-% enthalten.

Der weitere wesentliche Bestandteil der erfindungsgemäßen Dispersion ist mindestens ein Amphiphil (C).

Amphiphile (C) sind bekanntermaßen Moleküle, die sowohl hydrophile als auch lipophile Eigenschaften haben (vgl. Römpp Chemie Lexikon, Georg Thieme Verlag, Stuttgart, New York, 9. Auflage, 1989, Band 1, Seite 176, »Amphiphil«).

Vorzugsweise werden die Amphiphile (C) aus der Gruppe, bestehend aus Monoalkoholen, insbesondere Monoalkoholen mit 3 bis 6 Kohlenstoffatomen im Molekül, und aliphatischen Polyolen, insbesondere Diolen mit 3 bis 12 Kohlenstoffatomen im Molekül, ausgewählt.

Beispiel gut geeigneter Monoalkohole sind Propanol, Isopropanol, n-Butanol, Isobutanol, sec-Butanol, tert.-Butanol, Amylalkohol, Neopentylalkohol oder n-Hexanol.

Beispiele geeigneter Diole sind Propylenglykol, Trimethylenglykol, Butylenglykol, 1,5-Pentandiol, 1,6-Hexandiol und die stellungsisomeren Diethyloctandiole, wie sie beispielsweise aus der deutschen Patentanmeldung DE 198 09 643 A 1 bekannt sind.

Besonders bevorzugt werden Propanol, Isopropanol, Butanol oder Isobutanol verwendet.

Zusäzlich zu den Amphiphilen (C) oder anstelle von diesen kann mindestens eine organische, vorzugsweise nichtaromatische, Verbindung verwendet werden, die Chelatliganden zu bilden vermag. Hierbei handelt es sich um organische Verbindungen mit mindestens zwei funktionellen Gruppen, welche an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Beispiele geeigneter organischer Verbindungen sind Dimethylglyoxim, Ethylendiaminetraessigsäure oder - phosphonsäure, Etheramine oder Essigsäure oder Verbindungen, die Carbonylgruppen in 1,3-Stellung enthalten, wie Acetylaceton oder Acetessigsäureethylester (Ethylacetoacetat). Ergänzend wird auf Römpp Chemie Lexikon, Georg Thieme Verlag, Stuttgart, 1989, Band 1,Seite 634, verwiesen. Besonders bevorzugt wird Acetessigsäureethylester verwendet.

Der Gehalt der erfindungsgemäßen Dispersion an den Amphiphilen (C) und/oder den chelatbildenden Verbindungen kann sehr breit variieren und richtet sich nach den Erfordernissen des Einzelfalls. Vorzugsweise sind die Amphiphile (C) und/oder die chelatbildenden Verbindungen (C) in den erfindungsgemäß zu verwendenden Dispersion in einer Menge von, bezogen auf die Summe der wesentlichen Bestandteile (A), (B), (C) und (D), 1 bis 30, bevorzugt 1 bis 25 und insbesondere 1 bis 20 Gew.-% enthalten.

Die erfindungsgemäße Dispersion enthält des weiteren mindestens ein, bevorzugt mindestens zwei und insbesondere zwei Vernetzungsmittel (D). Es können die Vernetzungsmittel (D) verwendet werden, wie sie auf dem Gebiet der thermisch härtbaren Beschichtungsstoffe üblicherweise eingesetzt werden. Die Vernetzungsmittel (D) enthalten reaktive funktionellen Gruppen (S 2), die mit sich selbst und/oder mit komplementären reaktiven funktionellen Gruppen (S 2) Reaktionen eingehen können. Vorzugsweise sind diese komplementären reaktiven funktionellen Gruppen (S 2) in dem Polymer und/oder Oligomer (A), auf den oberflächenmodifizierten Nanopartikein (B) und/oder in dem Amphiphil (C) enthalten. Beispiele geeigneter reaktiver funktionellen Gruppen (S 2) gehen aus der Übersicht »Beispiele komplementärer reaktiver funktioneller Gruppen (S 2)« hervor. Bevorzugt werden die reaktiven funktionellen Gruppen (S 2) aus der Gruppe, bestehend aus N-Methylol-, N-Methytolether- und Alkoxycarbonylaminogruppen, ausgewählt.

Beispiele geeigneter Vernetzungsmittel (D), die diese bevorzugten reaktiven funktionellen Gruppen (S 2) enthalten, sind Aminoplastharze und Tris(alkoxycarbonylamino)triazine.

Die geeigneten Tris(alkoxycarbonylamino)triazine weisen die folgende allgemeine Formel auf: 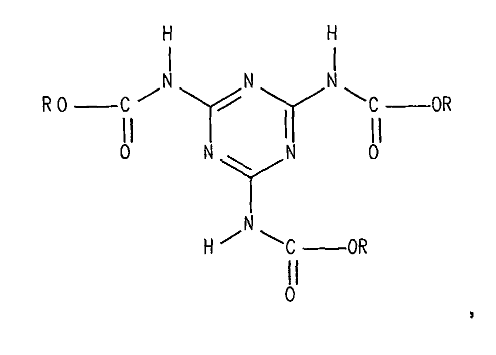 worin R insbesondere für Alkylgruppen steht. Sie werden beispielsweise in den amerikanischen Patenten US 4,939,213 A 1, US 5,084,541 A 1 oder der europäischen Patentanmeldung EP 0 624 577 A 1 beschrieben. Insbesondere werden Tris(methoxycarbonylamino)-, Tris(butoxycarbonylamino)- und/oder Tris(2-ethylhexoxycarbonylamino)triazine verwendet. Von Vorteil sind die MethylButyl-Mischester, die Butyl-2-Ethylhexyl-Mischester und die Butylester.

Diese haben gegenüber dem reinen Methylester den Vorzug der besseren Löslichkeit in Polymerschmelzen und neigen auch weniger zum Auskristallisieren.

Geeignete Aminoplastharze sind beispielsweise Melaminharze, Guanaminharze oder Hamstoffharze, insbesondere Melaminformaldehydharze. Sie werden beispielsweise in Römpp Lexikon Lacke und Druckfarben, Georg Thieme Verlag, 1998, Seite 29, »Aminoharze«, in dem Lehrbuch "Lackadditive" von Johan Bieleman, Wiley-VCH, Weinheim, New York, 1998, Seiten 242 ff., in dem Buch "Paints, Coatings and Solvents", second completely revised edition, Edit. D. Stoye und W. Freitag, Wiley-VCH, Weinheim, New York, 1998, Seiten 80 ff., in den Patenten US 4 710 542 A 1 und EP 0 245 700 B 1, in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, oder in dem Artikel von B. C. Li und G. Wilkes in Chemical Materials, Heft 13, Seiten 3663 bis 3668, 2001, beschrieben.

Der Gehalt der erfindungsgemäßen Dispersion an dem Vernetzungsmittel oder den Vemetzungsmitteln (D) kann sehr breit variieren und richtet sich insbesondere nach der Funktionalität der übrigen Bestandteile (A), (B) und/oder (C) hinsichtlich der komplementären reaktiven funktionellen Gruppen (S 2). Vorzugsweise liegt der Gehalt bei 1 bis 50, bevorzugt 1 bis 40 und insbesondere 1 bis 30 Gew.-%, jeweils bezogen auf die Summe der wesentlichen Bestandteile (A), (B), (C) und (D).

Darüber hinaus kann die erfindungsgemäße Dispersion noch mindestens ein übliches und bekanntes Pigment (E) enthalten. Der Gehalt der erfindungsgemäßen Dispersion an den Pigmenten (E) kann bereit variieren und richtet sich vor allem nach der Dispergierbarkeit der Pigmente und dem technischen Effekt, der hiermit erzielt werden soll. Der Fachmann kann diesen Gehalt im Einzelfall anhand seines allgemeinen Fachwissens leicht festlegen. Vorzugsweise wird das Pigment (E) aus der Gruppe, bestehend aus farbgebenden, optisch effektgebenden, elektrisch leitfähigen, magnetischen, magnetisch abschirmenden, fluoreszierenden, phosphoreszierenden, korrosionshemmenden und füllenden Pigmenten sowie Pigmenten, die mindestens zwei dieser. Eigenschaften aufweisen, ausgewählt. Die Einarbeitung der Pigmente (E) in die erfindungsgemäßen Dispersionen erfolgt vorzugsweise über Pigmentpasten, insbesondere auf der Basis von Dispersionen der Copolymerisate (A).

Außer den vorstehend beschriebenen Bestandteilen kann die erfindungsgemäße Dispersion noch weitere lackübliche Bestandteile wie übliche und bekannte Additive enthalten.

Die Herstellung der erfindungsgemäßen Dispersion erfordert keine methodischen Besonderheiten, sondern erfolgt nach den üblichen und bekannten Methoden der Herstellung wässriger Dispersionen durch Vermischen der vorstehend beschriebenen Bestandteile in geeigneten Mischaggregaten wie Rührkessel, Dissolver, Ultraturrax, In-line-Dissolver, Rührwerksmühlen, Perlmühlen oder Extruder.

Die erfindungsgemäße Dispersion dient der Herstellung der erfindungsgemäßen Folien, Formteile, insbesondere optischen Formteile, sowie Beschichtungen, insbesondere Beschichtungen auf grundierten oder ungrundierten Substraten.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Subtrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Die Oberflächen dieser Materialien können bereits vorlackiert oder vorbeschichtet sein.

Demgemäß ist die erfindungsgemäße Dispersion für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für das Lackieren von Kunststoffteilen, insbesondere transparenten Kunststoffteilen, Kleinteilen, Coils, Container, Emballagen, elektrotechnischen Bauteilen und weißer Ware sowie für das Beschichten von Hohlglasartikeln besonders gut geeignet.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Beschichtung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositmaterialien lackiert werden.

Im Falle von nicht funktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Besondere Vorteile zeigen die erfindungsgemäße Dispersion und die erfindungsgemäßen Beschichtungen in der Automobilserien- und Reparaturlackierung als klare und transparente, hochkratzfeste, hochglänzende flexible, säure- und wasserbeständige, fest haftende, steinschlagfeste Klarlackierungen im Rahmen farb- und/oder effektgebender Mehrschichtlackierungen.

Die erfindungsgemäßen Mehrschichtlackierungen können in unterschiedlicher erfindungsgemäßer Weise hergestellt werden. Bevorzugt werden die in der deutschen Patentanmeldung DE 199 30 664 A 1, Seite 15, Zeile 36 bis 58, beschriebenen Nass-in-nass-Verfahren eingesetzt.

Es ist ein weiterer besonderer Vorteil der erfindungsgemäßen Dispersion, dass sie sich auch hervorragend für die Herstellung von farb- und/oder effektgebenden Beschichtungen, insbesondere von Unidecklackierungen, eignen. Die erfindungsgemäßen Unidecklackierungen sind ausgesprochen kratzfest, flexibel, chemikalienbeständig, witterungsbeständig, hoch glänzend und von hervorragendem Deckvermögen und haften hervorragend auf den grundierten und ungrundierten Substraten. Sie kommen daher insbesondere für die Automobilserien- und Reparaturlackierung in Betracht.

Da die aus der erfindungsgemäßen Dispersion hergestellten erfindungsgemäßen Beschichtungen auch auf bereits ausgehärteten Elektrotauchlackierungen, Füllerlackierungen, Basislackierungen oder üblichen und bekannten Klarlackierungen so hervorragend haften, eignen sie sich ausgezeichnet für die Autoreparaturlackierung oder die Kratzfestausrüstung von exponierten Stellen von lackierten Automobilkarosserien.

Die Applikation der erfindungsgemäßen Dispersion kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikationen kann bei Temperaturen von max. 70 bis 80 °C durchgeführt werden, so dass geeignete Applikationsviskositäten erreicht werden, ohne dass bei der kurzzeitig einwirkenden thermischen Belastung eine Veränderung oder Schädigungen des Wasserbasislacks und ihres gegebenenfalls wiederaufzubereitenden Overspray eintreten. So kann das Heißspritzen so ausgestaltet sein, dass die erfindungsgemäße Dispersion nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für das Overspray, z. B. der erfindungsgemäße Dispersion selbst, betrieben wird.

Von ganz besonderem Vorteil ist, dass die erfindungsgemäße Beschichtung durch Applikation der erfindungsgemäßen Dispersion in einem Schritt appliziert werden kann und nicht aus mehreren diskreten, separat hergestellten Beschichtungen aufgebaut werden muss.

Bei der Automobillackierung werden die Elektrotauchlackschicht, Füllerlackschicht, Basislackschicht, Klarlackschicht und Unidecklackschicht üblicherweise in einer Nassschichtdicke appliziert, dass nach ihrer Aushärtung Schichten mit der für ihre Funktionen notwendigen und vorteilhaften Schichtdicken resultieren. Im Falle der Elektrotauchlackierung liegt diese Schichtdicke bei 10 bis 70, vorzugsweise 10 bis 60, besonders bevorzugt 15 bis 50 und insbesondere 15 bis 45 µm; im Falle der Füllerlackierung liegt sie bei 10 bis 150, vorzugsweise 10 bis 120, besonders bevorzugt 10 bis 100 und insbesondere 10 bis 90 µm; im Falle der Basislackierung liegt sie bei 5 bis 50, vorzugsweise 5 bis 40, besonders bevorzugt 5 bis 30 und insbesondere 10 bis 25 µm; im Falle der erfindungsgemäßen Klarlackierungen liegt sie bei mindestens 30 bis 120, vorzugsweise mindestens 40 bis 100, besonders bevorzugt 50 bis 100 und insbesondere 60 bis 100 µm und im Falle der Unidecklackierungen liegt sie bei 15 bis 100, vorzugsweise 20 bis 90, besonders bevorzugt 20 bis 85 und insbesondere 20 bis 80 µm. Es kann aber auch der aus der europäischen Patentanmeldung EP 0 817 614 A 1 bekannte Mehrschichtaufbau aus einer Elektrotauchlackierung, einer ersten Basislackierung, einer zweiten Basislackierung und einer erfindungsgemäßen Klarlackierung angewandt werden, worin die Gesamtschichtdicke der ersten und zweiten Basislackierung bei 15 bis 40 µm liegt und die Schichtdicke der ersten Basislackierung 20 bis 50% der besagten Gesamtschichtdicke beträgt.

Die Füllerlackschicht und Unidecklackschicht oder die Füllerlackschicht, Basislackschicht und Klarlackschicht können thermisch oder thermisch und mit aktinischer Strahlung (Dual Cure) gehärtet werden.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10 g Wasser/kg Luft, insbesondere < 5 g/kg Luft, unterstützt und/oder verkürzt werden, sofern hierbei keine Schädigungen oder Veränderungen der Lackschichten eintreten, etwa eine vorzeitige vollständige Vemetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Besonders bevorzugt wird ein Verfahren angewandt, bei der der Bestandteil Wasser rasch aus den Nassschichten entfernt wird. Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken«, beschrieben.

Vorteilhafterweise erfolgt die thermische Härtung bei einer Temperatur von 50 bis 200 °C, besonders bevorzugt 60 bis 190 °C und insbesondere 80 bis 180 ° C während einer Zeit von 1 min bis zu 2 h, besonders bevorzugt 2 min bis zu 1 h und insbesondere 3 min bis 45 min.

Weiterhin wird die Härtung mit aktinischer Strahlung mit UV-Strahlung und/oder Elektronenstrahlen durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas oder einer sauerstoffabgereicherten Atmosphäre gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben. Weitere Beispiele geeigneter Verfahren und Vorrichtungen zur Härtung mit aktinischer Strahlung werden in der deutschen Patentanmeldung DE 198 18 735 A 1, Spalte 10, Zeilen 31 bis 61, beschrieben.

Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlem, verbunden mit einer automatischen Bewegungseinrichtung für das Bestrahlen von Hohlräumen oder Kanten, (partiell) ausgehärtet werden.

Hierbei kann die Aushärtung stufenweise erfolgen, d. h. durch mehrfache Belichtung oder Bestrahlung mit aktinischer Strahlung. Dies kann auch alternierend erfolgen, d. h., dass abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Die erfindungsgemäßen Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rissbildung (mudcracking) oder Verlaufsstörungen oder Oberflächenstrukturen in den erfindungsgemäßen Klarlackierungen auf.

Insbesondere weisen die erfindungsgemäßen Mehrschichtlackierungen einen hervorragenden Metallic-Effekt, einen hervorragenden D.O.I. (distinctiveness of the reflected image), eine ganz besonders hohe Kratzfestigkeit und eine hervorragende Oberflächenglätte auf.

Insbesondere weisen die erfindungsgemäßen Unidecklackierungen brillante Farben, eine hervorragende Oberflächenglätte, eine ganz besonders hohe Kratzfestigkeit und Chemikalienbeständigkeit und einen hohen Glanz auf.

Demzufolge weisen die erfindungsgemäßen grundierten oder ungrundierten Substrate, die mit mindestens einer erfindungsgemäßen Beschichtung beschichtet sind, bei einem besonders vorteilhaften anwendungstechnischen Eigenschaftsprofil eine besonders lange Gebrauchsdauer auf, was sie wirtschaftlich, ästhetisch und technisch besonders wertvoll macht.

### Beispiele

### Herstellbeispiel 1

### Die Herstellung der Dispersionen eines Copolymerisats (A)

In einem Reaktiongefäß, ausgerüstet mit einem Rührer und drei Zulaufgefäßen, wurden 1.361,7 Gewichtsteile deionisiertes Wasser vorgelegt und auf 75 °C erhitzt. Anschließend wurden bei dieser Temperatur zur Vorlage drei separate Zuläufe parallel und gleichmäßig zudosiert. Zulauf 1 bestand aus 24,4 Gewichtsteilen Acrylsäure, 44,0 Gewichtsteilen Methylmethacrylat und 3,6 Gewichtsteilen 1,1-Diphenylethylen. Zulauf 2 bestand aus 23 Gewichtsteilen einer 25 Gew.-% igen wäßrigen Ammoniaklösung. Zulauf 3 bestand aus einer Lösung von 5,4 Gewichtsteilen Ammoniumperoxodisulfat in 138,7 Gewichtsteilen deionisiertem Wasser. Die Zuläufe 1 bis 3 wurden während 30 min zudosiert. Nach Beendigung der Zugabe wurde das Reaktionsgemisch während einer H bei 75 °C gerührt. Anschließend wurde es auf 90 °C erhitzt. Bei dieser Temperatur wurde über einen Zulauf 4 eine Monomermischung aus 191,7 Gewichtsteilen n-Butylmethyacrylat, 153,4 Gewichtsteilen Styrol, 93,3 Gewichtsteilen Hydroxypropylmethacrylat, 424,9 Gewichtsteilen Hydroxyethylmethacrylat und 173,1 Gewichtsteilen Ethylhexylmethacrylat und 207,3 Gewichtsteilen einer 50%igen Lösung von Tris(alkoxycarbonylamino)triazin (TACT) in Butanol während 4 h gleichmäßig zudosiert. Nach Beendigung der Zugabe schloss sich eine zweistündige Nachpolymerisation bei 90 °C an. Die resultierende erfindungsgemäße Dispersion (A.1) wies einen Festkörpergehalt von 41,2 Gew.-% auf.

Das Copolymerisat (A.1) wies bei pH-Werten von 2 bis 7 eine elektrophoretische Mobilität < -2 (µm/s)/(V/cm) auf. Die elektrophorethische Mobilität wurde mit Hilfe der Laser-Doppler-Elektrophorese bestimmt. Dabei wurde als Messgerät ein Zetasizer ® 3000 der Firma Malvern angewandt.

### Herstellbeispiel 2

### Die Herstellung oberflächenmodifizierter Nanopartikel (B)

10 Gewichtsteile Böhmit (Disperal ® P 3 der Firma Sasol Germany GmbH) wurden zu 90 Gewichtsteilen verdünnter Essigsäure (0,1 N) gegeben und bei Raumtemperatur solange gerührt, bis das Böhmit vollständig gelöst war. Anschließend wurde die kolloidale Lösung während 5 min in einem Ultraschallbad behandelt. Es resultierte ein homogenes Böhmit-Sol.

Das Böhmit-Sol wurde mit 33 Gewichtsteilen Glycidyloxypropyltriethoxysilan versetzt, wonach die resultierende Mischung während 2 h bei Raumtemperatur gerührt wurde.

### Beispiel 1

### Die Herstellung eines Klarlacks und einer Mehrschichtlackierung

Es wurde ein Klarlack durch Vermischen der folgenden Bestandteile und Homogenisieren der resultierenden Mischung hergestellt:
133 Gewichtsteile der Dispersion der oberflächenmodifizierten Nanopartikel (B) gemäß Herstellbeispiel 2,
10 Gewichtsteile Acetessigsäureethylester (C),
20 Gewichtsteile der Dipsersion eines Copolymerisats (A) gemäß Herstellbeispiel 1,
20 Gewichtsteile eines Melamin-Formaldehydharzes (CYMEL® 327, Hexamethoyxmethyl-Typ, Firma Dyno-Cytec) und
0,5 Gewichsteile BYK ® 301 (Siliconadditiv der Firma Byk Chemie).

Der Klarlack wurde mit einer Fließbecherpistole in mehreren Kreuzgängen pneumatisch in einer Nassschichtdicke auf Prüftafeln appliziert, dass nach der Aushärtung der Klarlackschichten bei 140 °C während 22 min Klarlackierungen einer Schichtdicke von 40 µm resultierten.

Als Prüftafeln wurden Stahltafeln aus Karosseriestahl verwendet, die mit handelsüblicher Zinkphosphatlösung vorbehandelt worden waren. Die Stahltafeln wurden nacheinander mit einer Elektrotauchlackierung einer Schichtdicke von 18 bis 22 µm (während 15 min bei 175 °C gehärtet), einer konventionellen Füllerlackierung einer Schichtdicke von 35 bis 40 µm (während 20 min bei 160 °C gehärtet) und einer schwarzen Basislackierung einer Schichtdicke von 12 bis 15 µm (während 20 min bei 140 °C gehärtet) beschichtet.

Die resultierenden Klarlackierungen waren frei von Spannungsrissen und anderen Oberflächendefekten.

Sie waren außerdem außergewöhnlich kratzfest, was anhand des Stahlwolle-Kratztests (Note 1) untermauert wurde.

Zur Durchführung des Stahlwolle-Kratztests wurde ein Hammer nach DIN 1041 (Gewicht ohne Stiel: 800 g; Stiellänge: 35 cm) verwendet. Die Prüftafeln wurden vor dem Test während 24 h bei Raumtemperatur gelagert.

Die flache Hammerseite wurde mit einer Lage Stahlwolle bespannt und mit Tesakrepp an den hochgeschlagenen Seiten befestigt. Der Hammer wurde im rechten Winkel auf die Klarlackierungen aufgesetzt. Das Gewichtsstück des Hammers wurde ohne zu verkannten und ohne zusätzliche Körperkraft in einer Spur über die Oberfläche der Klarlackierungen geführt.

Bei jeder Prüfung wurden 100 Doppelhübe in einer Zeit von etwa 100 s ausgeführt. Nach jeder dieser Einzelprüfungen wurde die Stahlwolle ausgetauscht.

Nach der Belastung wurden die Prüfflächen mit einem weichen Tuch von den Stahlwolleresten gereinigt. Die Prüfflächen wurden visuell unter Kunstlicht ausgewertet und wie folgt benotet:

| **Note** | **Schädigungsbild** |
|---|---|
| 1 | nicht vorhanden |
| 2 | geringen |
| 3 | mäßig |
| 4 | mäßig bis mittel |
| 5 | stark |
| 6 | sehr stark |

Die Auswertung erfolgte unmittelbar nach Versuchsende.

Die Klarlackierungen waren auch chemikalienbeständig, was mit Hilfe des BART bestimmt wurde

Der BART (BASF ACID RESISTANCE TEST) diente der Ermittlung der Beständigkeit von Lackoberflächen gegen Säuren, Laugen und Wassertropfen. Dabei wurden die Mehrschichtlackierungen auf einem Gradientenofen nach der Einbrennung weiteren Temperaturbelastungen ausgesetzt (30 min 40°C, 50°C, 60°C und 70°C). Zuvor wurden die Testsubstanzen (Schwefelsäure 1 %-ig, 10%-ig, 36%-ig; schweflige Säure 5%-ig, Salzsäure 10%-ig, Natronlauge 5%-ig, VE (= vollentsalztes) Wasser- 1,2,3 bzw. 4 Tropfen) definiert mit einer Dosierpipette aufgebracht. Im Anschluß an die Einwirkung der Substanzen wurden diese unter fließendem Wasser entfernt und die Beschädigungen nach 24 h entsprechend einer vorgegebenen Skala visuell beurteilt:

| **Benotung** | **Aussehen** |
|---|---|
| 0 | kein Defekt |
| 1 | leichte Markierung |
| 2 | Markierung/Vermattung/keine Erweichung |
| 3 | Markierung/Vermattung7Farbtonveränderung/Erweich ung |
| 4 | Risse/beginnende Durchätzung |
| 5 | Klarlack entfernt |

Es wurde jede einzelne Markierung (Spot) ausgewertet und das Ergebnis in Form einer Note für jede Testsubstanz fiestgehalten:

| **Testsubstanz** | **Note** |
|---|---|
| Schwefelsäure 1 %ig | 1 |
| Schwefelsäure 10%ig | 2 |
| Schwefelsäure 36%ig | 3 |
| Salzsäure 10%ig | 2 |
| Schweflige Säure 6%ig | 2 |
| Salzsäure 10%ig | 2 |
| Natronlauge 5 %ig | 2 |
| VE-Wasser | 0 |

### Beispiel 2

### Die Herstellung eines Unidecklacks und einer Unidecklackierung

Es wurde zunächst eine Pigmentpaste durch Vermischen der folgenden Bestandteile hergestellt:
20 Gewichtsteile der Dispersion des Copolymerisats (A) des Herstellbeispiels 1,
25 Gewichtsteile eines Melamin-Formaldehydharzes (CYMEL® 327, Hexamethoyxmethyl-Typ, Firma Dyno-Cytec),
0,5 Gewichsteile BYK ® 301 (Siliconadditiv der Firma Byk Chemie),
1 Gewichsteil BYK ® 028 (Entschäumer der Firma Byk Chemie),
1,2 Gewichtsteile eines Entlüftungsmittels (Deutero) ® 201 E der Firma Deuteron GmbH),
6,7 Gewichtsteile deionisiertes Wasser und
7 Gewichtsteile eines Weißpigments (Titandioxid RH D2 der Firma Huntsman Tioxide Europe).

Die resultierende Mischung wurde während 30 min in einer Perlmühle angerieben. Um die während der Mahlung gebildeten Lüfteinschlüsse zu entfernen, ließ man die Pigmentpaste 12 h lang ruhen. Anschließend wurde sie mit 61,4 Gewichtsteilen der Dispersion der oberflächehmodifizierten Nanopartikel (B) gemäß Herstellbeispiel 2, und 10 Gewichtsteile Acetessigsäureethylester (C) versetzt, wonach man die Mischung homogenisierte.

Der resultierende Unidecklack wurde mit einer Fließbecherpistole in mehreren Kreuzgängen pneumatisch in einer Nassschichtdicke auf Prüftafein appliziert, dass nach der Aushärtung der Unidecklackschichten bei 140 °C während 22 Minuten Unidecklackierungen einer Schichtdicke von 40 µm resultierten.

Als Prüftafeln wurden Stahltafeln aus Karosseriestahl und Tafeln aus chromatiertem Aluminium verwendet, die mit handelsüblicher Zinkphosphatlösung vorbehandelt worden waren. Die Stahltafeln wurden nacheinander mit einer Elektrotauchlackierung einer Schichtdicke von 18 bis 22 µm (während 15 Minuten bei 175 °C gehärtet) und einer konventionellen Füllerlackierung einer Schichtdicke von 35 bis 40 µm (während 20 min bei 160 °C gehärtet) beschichtet.

Die resultierenden Klarlackierungen waren frei von Spannungsrissen und anderen Oberflächendefekten. Sie waren außerdem außergewöhnlich kratzfest, was anhand des Stahlwolle-Kratztests (Note 1) untermauert wurde. Der Glanz nach DIN 67530 (20 °) lag bei 72 Einheiten.

## Patentansprüche

1. Wässrige Dispersion eines pH-Wertes von 2 bis 7, enthaltend
(A) mindestens ein quellbares Polymer oder Oligomer mit anionischen und/oder potenziell anionischen und/oder nicht-ionischen hydrophilen funktionellen Gruppen,
(B) oberflächenmodifizierte, kationisch stabilisierte, anorganische Nanopartikel mindestens einer Art,
(C) mindestens eine Verbindung, ausgewählt aus der Gruppe, bestehend aus Amphiphilen und organischen Verbindungen, die Chelatliganden zu bilden vermögen, und
(D) mindestens ein Vernetzungsmittel.

2. Wässrige Dispersion nach Anspruch 1, **dadurch gekennzeichnet, dass** die Polymeren und Oligomeren (A) aus der Gruppe, bestehend aus anionischen und/oder potenziell anionischen funktionellen Gruppen enthaltenden Polymeren und Oligomeren, die bei pH-Werten von 2 bis 7 eine elektrophoretische Mobilität ≤ - 0,5 (µm/s)/(V/cm) aufweisen, ausgewählt werden.

3. Wässrige Dispersion nach Anspruch 1 oder 2, **dadurch gekennzeichnet, dass** die Polymeren und Oligomeren (A) mindestens eine reaktive funktionelle Gruppe (S), ausgewählt aus der Gruppe, bestehend aus (S 1) reaktiven funktionellen Gruppen, die mindestens eine mit aktinischer Strahlung aktivierbare Bindung enthalten, und (S 2) reaktiven funktionellen Gruppen, die mit Gruppen ihrer Art ("mit sich selbst") und/oder mit komplementären reaktiven funktionellen Gruppen (S 2) Reaktionen eingehen können, enthalten.

4. Wässrige Dispersion nach Anspruch 3, **dadurch gekennzeichnet, dass** die zu den reaktiven funktionellen Gruppen (S 2) des Poymers und/oder Oligomers (A) komplementären reaktiven funktionellen Gruppen (S 2) in den oberflächenmodifizierten Nanopartikeln (B), dem Amphiphil (C) und/oder dem Vernetzungsmittel (D) vorliegen.

5. Wässrige Dispersion nach einem der Ansprüche 1 bis 4, **dadurch gekennzeichnet, dass** die anorganischen Nanopartikel (B) aus der Gruppe, bestehend aus Haupt- und Nebengruppen-Metallen und deren Verbindungen, ausgewählt werden.

6. Wässrige Dispersion nach Anspruch 5, **dadurch gekennzeichnet, dass** die Haupt- und Nebengruppen-Metalle aus den Metallen der dritten bis fünften Hauptgruppe, der dritten bis sechsten sowie der ersten und zweiten Nebengruppe des Periodensystems der Elemente sowie den Lanthaniden, ausgewählt werden.

7. Wässrige Dispersion nach Anspruch 6, **dadurch gekennzeichnet, dass** die Metalle aus der Gruppe, bestehend aus Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, ausgewählt werden.

8. Wässrige Dispersion nach einem der Ansprüche 1 bis 7, **dadurch gekennzeichnet, dass** die Nanopartikel (B) mit mindestens einer Verbindung der allgemeinen Formel I:
**[(S-)**_{**o**}**-L-]**_{**m**}**M(R)**_{**n**}**(H)**_{**p**} (I),
worin die Indizes und die Variablen die folgende Bedeutung haben:
S reaktive funktionelle Gruppe;
L mindestens zweibindige organische verknüpfende Gruppe;
H hydrolysierbare einbindige Gruppe oder hydrolysierbares Atom;
M zwei- bis sechswertiges Hauptgruppen- und Nebengruppen-Metall;
R einbindiger organischer Rest;
o eine ganze Zahl von 1 bis 5;
m + n + p eine ganze Zahl von 2 bis 6;
p eine ganze Zahl von 1 bis 6
m und n Null oder eine ganze Zahl von 1 bis 5;
modifiziert sind.

9. Wässrige Dispersion nach Anspruch 8, **dadurch gekennzeichnet, dass** die reaktive funktionelle Gruppe S aus der Gruppe, bestehend aus (S1) reaktiven funktionellen Gruppen, die mindestens eine mit aktinischer Strahlung aktivierbare Bindung enthalten, und (S 2) reaktiven funktionellen Gruppen, die mit Gruppen ihrer Art ("mit sich selbst") und/oder mit komplementären reaktiven funktionellen Gruppen Reaktionen eingehen, ausgewählt wird.

10. Wässrige Dispersion nach Anspruch 9, **dadurch gekennzeichnet, dass** die zu den reaktiven funktionellen Gruppen (S 2) der Verbindungen 1 komplementären reaktiven funktionellen Gruppen (S 2) in dem Polymer und/oder Oligomer (A), dem Amphiphil (C) und/oder dem Vernetzungsmittel (D) vorliegen.

11. Wässrige Dispersion nach einem der Ansprüche 1 bis 10, **dadurch gekennzeichnet, dass** das Amphiphil (C) aus der Gruppe, bestehend aus Monoalkoholen und aliphatischen Polyolen, ausgewählt wird.

12. Wässrige Dispersion nach Anspruch 11,-**dadurch gekennzeichnet, dass** die Monoalkohole (C) aus der Gruppe, bestehend aus Monoalkoholen mit 3 bis 6 Kohlenstoffatomen im Molekül, und die aliphatischen Polyole (C) aus der Gruppe, bestehend aus Diolen mit 3 bis 12 Kohlenstoffatomen im Molekül, ausgewählt werden.

13. Wässrige Dispersion nach einem der Ansprüche 1 bis 12, **dadurch gekennzeichnet, dass** die Chelatliganden bildende organische Verbindung (C) aus der Gruppe, bestehend aus Verbindungen mit mindestens zwei funktionellen Gruppen, die an Metallatome oder - ionen koordinieren können, ausgewählt werden.

14. Wässrige Dispersion nach einem der Ansprüche 1 bis 13, **dadurch gekennzeichnet, dass** das Vernetzungsmittel (D) reaktive funktionelle Gruppen (S 2) enthält, die mit in dem Polymer und/oder Oligomer (A), auf den oberflächenmodifizierten Nanopartikein (B) und/oder in dem Amphiphil (C) vorhandenen komplementären reaktiven funktionellen Gruppen (S 2) Reaktionen eingehen können.

15. Wässrige Dispersion nach Anspruch 14, **dadurch gekennzeichnet, dass** die reaktiven funktionellen Gruppen (S 2) der Vernetzungsmittel (D) aus der Gruppe, bestehend aus N-Methylol-, N-Methylolether und Alkoxycarbonylaminogruppen, ausgewählt werden.

16. Wässrige Dispersionen nach Anspruch 15, **dadurch gekennzeichnet, dass** das Vernetzungsmittel (D) aus der Gruppe, bestehend aus Aminoplastharzen und Tris(alkoxycarbonylamino)triazinen, ausgewählt wird.

17. Wässrige Dispersion nach Anspruch 16, **dadurch gekennzeichnet, dass** die Aminoplastharze aus der Gruppe der Melaminformaldehydharze ausgewählt werden.

18. Wässrige Dispersionen nach einem der Ansprüche 2 bis 17, **dadurch gekennzeichnet, dass** die komplementären reaktiven funktionellen Gruppen (S 2) des Polymers und/oder Oligomers (A) und/oder des Amphiphils (C) Hydroxylgruppen sind.

19. Wässrige Dispersion nach einem der Ansprüche 1 bis 18, **dadurch gekennzeichnet, dass** sie mindestens ein Pigment (E) enthält.

20. Wässrige Dispersion nach Anspruch 19, **dadurch gekennzeichnet, dass** das Pigment (E) aus der Gruppe, bestehend aus farbgebenden, optisch effektgebenden, elektrisch leitfähigen, magnetischen, magnetisch abschirmenden, fluoreszierenden, phosphoreszierenden, korrosionshemmenden und füllenden Pigmenten sowie Pigmenten, die mindestens zwei dieser Eigenschaften aufweisen, ausgewählt wird.

21. Verfahren zur Herstellung einer wässrigen Dispersion gemäß einem der Ansprüche 1 bis 20, **dadurch gekennzeichnet, dass** man
(B) oberflächenmodifizierte, kationisch stabilisierte, anorganische Nanopartikel mindestens einer Art,
(C) mindestens eine Verbindung, ausgewählt aus der Gruppe, bestehend aus Amphiphilen und organischen Verbindungen, die Chelatliganden zu bilden vermögen, und
(D) mindestens ein Vernetzungsmittel sowie gegebenenfalls
(E) mindestens ein Pigment
in einer wässrigen Dispersion mindestens eines quellbaren Polymers oder Oligomers mit anionischen und/oder potenziell anionischen und/oder nicht-ionischen hydrophilen funktionellen Gruppen dispergiert und die resultierende Mischung homogenisiert.

22. Verwendung der wässrigen Dispersion gemäß einem der Ansprüche 1 bis 20 und der nach dem Verfahren gemäß Anspruch 21 hergestellten wässrigen Dispersion für das Lackieren oder Beschichten von Kraftfahrzeugkarosserien und Teilen hiervon, Fahrzeugen im Innen- und Außenbereich, Bauwerken im Innen- und Außenbereich, Türen, Fenstern und Möbeln, im Rahmen der industriellen Lackierung für das Lackieren von Kunststoffteilen, insbesondere von transparenten Kunststoffteilen, Kleinteilen, Coils, Container, elektrotechnischen Bauteilen und weißer Ware sowie für das Beschichten von Hohlglasartikeln.

23. Verwendung der wässrigem Dispersion gemäß einem der Ansprüche 1 bis 20 und der nach dem Verfahren gemäß Anspruch 21 hergestellten wässrigen Dispersion für die Herstellung von Formteilen und selbsttragenden Folien.

## Claims

1. Aqueous dispersion with a pH of from 2 to 7, comprising
(A) at least one swellable polymer or oligomer containing anionic and/or potentially anionic and/or nonionic hydrophilic functional groups,
(B) surface-modified, cationically stabilized, inorganic nanoparticles of at least one kind, and
(C) at least one compound selected from the group consisting of amphiphilic and organic compounds which are able to form chelate ligands, and
(D) at least one crosslinking agent.

2. Aqueous dispersion according to Claim 1, **characterized in that** the polymers and oligomers (A) are selected from the group consisting of polymers and oligomers which contain anionic and/or potentially anionic functional groups and have a pH of from 2 to 7 and an electrophoretic mobility ≤ -0.5 (µm/s)/(V/cm).

3. Aqueous dispersion according to Claim 1 or 2, **characterized in that** the polymers and oligomers (A) contain at least one reactive functional group (S) selected from the group consisting of (S1) reactive functional groups which contain at least one bond which can be activated with actinic radiation and (S2) reactive functional groups which are able to undergo reactions with groups of their own kind ("with themselves") and/or with complementary reactive functional groups (S2).

4. Aqueous dispersion according to Claim 3, **characterized in that** the reactive functional groups (S2) complementary to the reactive functional groups (S2) of the polymer and/or oligomer (A) are present in the surface-modified nanoparticles (B), the amphiphile (C) and/or the crosslinking agent (D).

5. Aqueous dispersion according to any one of Claims 1 to 4, **characterized in that** the inorganic nanoparticles (B) are selected from the group consisting of main group and transition group metals and their compounds.

6. Aqueous dispersion according to Claim 5, **characterized in that** the main group and transition group metals are selected from the metals of main groups three to five, transition groups three to six and also one and two of the periodic system of the elements, and the lanthanides.

7. Aqueous dispersion according to Claim 6, **characterized in that** the metals are selected from the group consisting of boron, aluminium, gallium, silicon, germanium, tin, arsenic, antimony, silver, zinc, titanium, zirconium, hafnium, vanadium, niobium, tantalum, molybdenum, tungsten, and cerium.

8. Aqueous dispersion according to any one of Claims 1 to 7, **characterized in that** the nanoparticles (B) are modified with at least one compound of the general formula II:
**[(S-)**_{**o**}**-L-]**_{**m**}**M(R)**_{**n**}**(H)**_{**p**} (I)
in which the indices and variables have the following meanings:
S is a reactive functional group;
L is an at least divalent organic linking group;
H is a hydrolysable monovalent group or a hydrolysable atom;
M is a divalent to hexavalent main group or transition group metal;
R is a monovalent organic radical;
o is an integer from 1 to 5;
m + n + p is an integer from 2 to 6;
p is an integer from 1 to 6;
m and n are zero or an integer from 1 to 5.

9. Aqueous dispersion according to Claim 8, **characterized in that** the reactive functional group S is selected from the group consisting of (S1) reactive functional groups which contain at least one bond which can be activated with actinic radiation and (S2) reactive functional groups which undergo reactions with groups of their own kind ("with themselves") and/or with complementary reactive functional groups.

10. Aqueous dispersion according to Claim 9, **characterized in that** the reactive functional groups (S2) complementary to the reactive functional groups (S2) of the compounds I are present in the polymer and/or oligomer (A), the amphiphile (C) and/or the crosslinking agent (D).

11. Aqueous dispersion according to any of Claims 1 to 10, **characterized in that** the amphiphile (C) is selected from the group consisting of monoalcohols and aliphatic polyols.

12. Aqueous dispersion according to Claim 11, **characterized in that** the monoalcohols (C) are selected from the group consisting of monoalcohols having from 3 to 6 carbon atoms in the molecule and the aliphatic polyols (C) are selected from the group consisting of diols having from 3 to 12 carbon atoms in the molecule.

13. Aqueous dispersion according to any one of Claims 1 to 12, **characterized in that** the organic compound (C) which forms chelate ligands is selected from the group consisting of compounds having at least two functional groups which are able to coordinate to metal atoms or metal ions.

14. Aqueous dispersion according to any one of Claims 1 to 13, **characterized in that** the crosslinking agent (D) contains reactive functional groups (S2) which are able to enter into reactions with complementary reactive function groups (S2) present in the polymer and/or oligomer (A), on the surface-modified nanoparticles (B) and/or in the amphiphile (C).

15. Aqueous dispersion according to Claim 14, **characterized in that** the reactive functional groups (S2) of the crosslinking agents (D) are selected from the group consisting of N-methylol, N-methylol ether, and alkoxycarbonylamino groups.

16. Aqueous dispersion according to Claim 15, **characterized in that** the crosslinking agent (D) is selected from the group consisting of amino resins and tris(alkoxycarbonylamino)triazines.

17. Aqueous dispersion according to Claim 16, **characterized in that** the amino resins are selected from the group of melamine-formaldehyde resins.

18. Aqueous dispersion according to any one of Claims 2 to 17, **characterized in that** the complementary reactive functional groups (S2) of the polymer and/or oligomer (A) and/or of the amphiphile (C) are hydroxyl groups.

19. Aqueous dispersion according to any one of Claims 1 to 18, **characterized in that** it comprises at least one pigment (E).

20. Aqueous dispersion according to Claim 19, **characterized in that** the pigment (E) is selected from the group consisting of colour-imparting, optical effect-imparting, electrically conductive, magnetic, magnetically shielding, fluorescent, phosphorescent, corrosion-inhibiting, and extending pigments, and also pigments having at least two of these properties.

21. Process for preparing an aqueous dispersion according to any one of Claims 1 to 20, **characterized in that**
(B) surface-modified, cationically stabilized, inorganic nanoparticles of at least one kind,
(C) at least one compound selected from the group consisting of amphiphiles and organic compounds which are able to form chelate ligands, and
(D) at least one crosslinking agent, and also, if desired,
(E) at least one pigment
are dispersed in an aqueous dispersion of at least one swellable polymer or oligomer containing anionic and/or potentially anionic and/or nonionic hydrophilic functional groups and the resulting mixture is homogenized.

22. Use of the aqueous dispersion according to any of Claims 1 to 20 and of the aqueous dispersion prepared according to the process according to Claim 21 for painting or coating motor vehicle bodies and parts thereof, the interior and exterior of motor vehicles, the interior and exterior of buildings, doors, windows, and furniture, in industrial coating for the coating of plastics parts, especially transparent plastics parts, small parts, coils, containers, electrical components, and white goods, and also for the coating of hollow glassware.

23. Use of the aqueous dispersion according to any of Claims 1 to 20 and of the aqueous dispersion prepared according to the process according to Claim 21 for producing mouldings and self-supporting films.

## Revendications

1. Dispersion aqueuse d'une valeur de pH de 2 à 7, contenant
(A) au moins un polymère ou oligomère gonflable comportant des groupes fonctionnels hydrophiles anioniques et/ou potentiellement anioniques et/ou non ioniques,
(B) des nanoparticules inorganiques stabilisées par voie cationique, modifiées en surface, d'au moins un type,
(C) au moins un composé choisi parmi le groupe constitué des amphiphiles et des composés organiques qui sont capables de former des ligands de chélation, et
(d) au moins un agent de réticulation.

2. Dispersion aqueuse suivant la revendication 1, **caractérisée en ce que** les polymères et oligomères (A) sont choisis parmi le groupe constitué des polymères et oligomères qui contiennent des groupes fonctionnels anioniques et/ou potentiellement anioniques et qui présentent, aux valeurs de pH de 2 à 7, une mobilité électrophorétique ≤-0,5 (µm/s)/(V/cm).

3. Dispersion aqueuse suivant la revendication 1 ou 2, **caractérisée en ce que** les polymères et oligomères (A) contiennent au moins un groupe fonctionnel réactif (S), choisi parmi le groupe constitué des groupes fonctionnels réactifs (s 1) qui contiennent au moins une liaison activable par un rayonnement actinique, et des groupes fonctionnels réactifs (S 2), qui, avec des groupes de leur type ("avec eux-mêmes") et/ou avec des groupes fonctionnels réactifs complémentaires (S 2) peuvent donner lieu à des réactions.

4. Dispersion aqueuse suivant la revendication 3, **caractérisée en ce que** les groupes fonctionnels réactifs complémentaires (S 2) aux groupes fonctionnels réactifs (S 2) du polymère et/ou oligomère (A) se présentent dans les nanoparticules modifiées en surface (B), l'amphiphile (C) et/ou l'agent de réticulation (D).

5. Dispersion aqueuse suivant l'une des revendications 1 à 4, **caractérisée en ce que** les nanoparticules inorganiques (B) sont choisies parmi le groupe constitué des métaux des groupes principaux et secondaires et de leurs composés.

6. Dispersion aqueuse suivant la revendication 5, **caractérisée en ce que** les métaux des groupes principaux et secondaires sont choisis parmi les métaux du troisième au cinquième groupe principal, du troisième au sixième groupe secondaire ainsi que du premier et du deuxième groupe secondaire du système périodique des éléments ainsi que parmi les lanthanides.

7. Dispersion aqueuse suivant la revendication 6, **caractérisée en ce que** les métaux sont choisis parmi le groupe constitué du bore, de l'aluminium, du gallium, du silicium, du germanium, de l'étain, de l'arsenic, de l'antimoine, de l'argent, du zinc, du titane, du zirconium, de l'hafnium, du vanadium, du niobium, du tantale, du molybdène, du tungstène et du cérium.

8. Dispersion aqueuse suivant l'une des revendications 1 à 7, **caractérisée en ce que** les nanoparticules (B) sont modifiées par au moins un composé de la formule générale I:
[(S-)ₒ-L-]ₘM(R)ₙ(H)ₚ (I)
dans laquelle les indices et les variables ont la signification suivante :
S est un groupe fonctionnel réactif,
L est un groupe de liaison organique à au moins deux liaisons,
H est un groupe hydrolysable à une liaison ou un atome hydrolysable,
M est un métal des groupes principaux et secondaires à deux jusqu'à six valences,
R est un radical organique à une liaison,
o est un nombre entier de 1 à 5,
m+n+p représente un nombre entier de 2 à 6,
p est un nombre entier de 1 à 6,
m et n valent 0 ou un nombre entier de 1 à 5.

9. Dispersion aqueuse suivant la revendication 8, **caractérisée en ce que** le groupe fonctionnel réactif S est choisi parmi le groupe constitué des groupes fonctionnels réactifs (S 1) qui contiennent au moins une liaison activable par un rayonnement actinique, et des groupes fonctionnels réactifs (S 2) qui, avec des groupes de leur type ("avec eux-mêmes") et/ou avec des groupes fonctionnels réactifs complémentaires, donnent lieu à des réactions.

10. Dispersion aqueuse suivant la revendication 9, **caractérisée en ce que** les groupes fonctionnels réactifs complémentaires (S 2) aux groupes fonctionnels réactifs (S 2) des composés I se présentent dans le polymère et/ou oligomère (A) l'amphiphile (C) et/ou l'agent de réticulation (D).

11. Dispersion aqueuse suivant l'une des revendications 1 à 10, **caractérisée en ce que** l'amphiphile (C) est choisi parmi le groupe constitué de monoalcools et de polyols aliphatiques.

12. Dispersion aqueuse suivant la revendication 11, **caractérisée en ce que** les monoalcools (C) sont choisis parmi le groupe constitué des monoalcools comportant 3 à 6 atomes de carbone dans la molécule et les polyols aliphatiques (C) parmi le groupe constitué des diols comportant 3 à 12 atomes de carbone dans la molécule.

13. Dispersion aqueuse suivant l'une des revendications 1 à 12, **caractérisée en ce que** les composés organiques formant des ligands de chélation (C) sont choisis parmi le groupe constitué de composés comportant au moins deux groupes fonctionnels qui peuvent coordonner des atomes ou ions métalliques.

14. Dispersion aqueuse suivant l'une des revendications 1 à 13, **caractérisée en ce que** l'agent de réticulation (D) contient des groupes fonctionnels réactifs (S 2) qui peuvent donner lieu à des réactions avec des groupes fonctionnels réactifs complémentaires (S 2) présents dans le polymère et/ou l'oligomère (A), sur les nanoparticules modifiées en surface (B) et/ou dans l'amphiphile (C).

15. Dispersion aqueuse suivant la revendication 14, **caractérisée en ce que** les groupes fonctionnels réactifs (S 2) des agents de réticulation (D) sont choisis parmi le groupe constitué de groupes N-méthylol, N-méthyloléther et alcoxycarbonylamino.

16. Dispersions aqueuses suivant la revendication 15, **caractérisées en ce que** l'agent de réticulation (D) est choisi parmi le groupe constitué des résines aminoplastes et des tris-(alcoxycarbonylamino)-triazines.

17. Dispersion aqueuse suivant la revendication 16, **caractérisée en ce que** les résines aminoplastes sont choisies parmi le groupe des résines de mélamine-formaldéhyde.

18. Dispersions aqueuses suivant l'une des revendications 2 à 17, **caractérisées en ce que** les groupes fonctionnels réactifs complémentaires (S 2) du polymère et/ou oligomère (A) et/ou de l'amphiphile (C) sont des groupes hydroxy.

19. Dispersion aqueuse suivant l'une des revendications 1 à 18, **caractérisée en ce qu'**elle contient au moins un pigment (E).

20. Dispersion aqueuse suivant la revendication 19, **caractérisée en ce que** le pigment (E) est choisi parmi le groupe constitué des pigments colorants, donnant un effet optique, électriquement conducteurs, magnétiques, protecteurs du point de vue magnétique, fluorescents, phosphorescents, inhibiteurs de corrosion et formant des charges ainsi que des pigments qui présentent au moins deux de ces propriétés.

21. Procédé de préparation d'une dispersion aqueuse suivant l'une des revendications 1 à 20, **caractérisé en ce qu'**on disperse
(B) des nanoparticules inorganiques, stabilisées par voie cationique, modifiées en surface, d'au moins un type,
(C) au moins un composé choisi parmi le groupe constitué d'amphiphiles et de composés organiques qui sont capables de former des ligands de chélation, et
(D) au moins un agent de réticulation, ainsi qu'éventuellement
(E) au moins un pigment,
dans une dispersion aqueuse d'au moins un polymère ou oligomère gonflable comportant des groupes fonctionnels hydrophiles anioniques et/ou potentiellement anioniques et/ou non ioniques, et on homogénéise le mélange résultant.

22. Utilisation de la dispersion aqueuse suivant l'une des revendications 1 à 20 et de la dispersion aqueuse préparée selon le procédé suivant la revendication 21, pour le vernissage ou le revêtement de carrosseries d'automobiles et de parties de celles-ci, de véhicules dans les zones intérieures et extérieures, de bâtiments dans les zones intérieures et extérieures, de portes, de fenêtres et de meubles, dans le cadre du vernissage industriel pour le vernissage de pièces en substance synthétique, en particulier de pièces en substance synthétique transparentes, de petit matériel, de bobines, de récipients, de pièces de construction électrotechniques et de produits blancs, ainsi que pour le revêtement d'articles en verre creux.

23. Utilisation de la dispersion aqueuse suivant l'une des revendications 1 à 20 et de la dispersion aqueuse préparée selon le procédé suivant la revendication 21, pour la fabrication de pièces façonnées et de feuilles autoportantes.
